# EUROPÄISCHE PATENTSCHRIFT

(11) **EP 1 488 433 B1**
(45) Veröffentlichungstag und Bekanntmachung des Hinweises auf die Patenterteilung: **28.06.2006**
(21) Anmeldenummer: 03744830.5
(22) Anmeldetag: 21.03.2003
(51) Int. Cl.: H01F 38/18, H04B 10/22, H04B 5/00

(54) **LEISTUNGSSTROMÜBERTRAGER FÜR WINDKRAFTANLAGE**
POWER TRANSFORMER FOR WIND ENERGY PLANTS
TRANSFORMATEUR DE COURANT DE PUISSANCE POUR EOLIENNE

(30) Priorität: 22.03.2002 DE 20204584 U
(43) Veröffentlichungstag der Anmeldung: 22.12.2004
(73) Patentinhaber: Walter Kraus GmbH, 86167 Augsburg (DE)
(72) Erfinder: BÜLTER, Olaf, 86551 Aichach (DE)
(74) Vertreter: Ernicke, Klaus Stefan
(86) Internationale Anmeldenummer: PCT/EP2003/002967
(87) Internationale Veröffentlichungsnummer: WO 2003/081615

(56) Entgegenhaltungen:
- DE-C- 19 953 583
- US-A- 5 272 350
- US-A- 5 814 900

## Beschreibung

Die Erfindung betrifft einen Übertrager, insbesondere für Windkraftanlagen mit den Merkmalen im Oberbegriff des Hauptanspruchs.

Windkraftanlagen bestehen aus einem meist mehrflügligen Windrotor, der durch Windkraft einen elektrischen Generator antreibt. Der vom Generator erzeugte Strom wird üblicherweise in das öffentliche Netz eingespeist. Windrotor und Generator befinden sich an oder in einem Gehäuse, was meist auf Ständern oder Masten in erheblicher Höhe über dem Boden drehbar angeordnet ist. Als Drehübertrager für den Leistungsstrom für die Energieversorgung und Steuerung der Verbraucher der Windkraftanlage werden üblicherweise Schleifringübertrager eingesetzt. Diese haben allerdings eine begrenzte Lebensdauer und bedürfen in regelmäßigen Abständen der Wartung. Für die Signalübertragung ist es üblich, die Steuer- und Regeleinrichtungen stationär am Boden oder an anderer geeigneter Stelle unterzubringen und eine drahtlose Signalübertragung z.B. per Funk auf Antennen am Gehäuse oben am Mast zu bewerkstelligen, was allerdings Probleme mit Blitzschlag, Funkstörungen etc. mit sich bringt. Die Leistungs- und Signalübertragung erfolgen damit auf getrennten Wegen. Problematisch ist außerdem die Ansteuerung der Erregerspule, die sich meist auf dem Rotorteil befindet. Eine Schleifringübertragung ist hierfür nicht ausreichend sicher. Außerdem kann es bei einer Schleifringübertragung zu erheblichen Schäden an den Kontakten kommen, die durch Strom- bzw. Spannungsschwankungen entstehen. Wegen dieser Schwierigkeiten setzt man sehr häufig permanent erregte Generatoren ein, die jedoch Nachteile hinsichtlich der Steuerung und Regelung des Generators und der einzuhaltenden Bandbreite für die Frequenz und die Spannung des generatorisch erzeugten Stroms haben.

Aus der US-A-S, 814, 900 ist, gemäß Oberbegriff des Anspruchs 1, ein Übertrager bekannt, der einen induktiven berührungslosen Leistungsstromübertrager und einen ebenfalls berührungslosen kapazitiven oder induktiven Signalstromübertrager besitzt. Der Übertrager ist als Dreh- und Festübertrager mit einem Übertragerteil, einem Rotorteil und einem dazwischenliegenden Luftspalt ausgebildet, welche gemeinsam im Gehäuse des Übertragerteils angeordnet sind. Der Luftspalt verläuft gerade und in einer Ebene. Die flächig ausgebildeten Empfangs- und Sendeantennen des Signalübertragers befinden sich beidseits des gleichen ebenen Luftspalts und liegen axial auf gleicher Höhe mit den Jochen oder Kernen des induktiven Leistungsstromübertragers.

Die US-A-5,272,350 zeigt einen ähnlichen Dreh- und Festübertrager mit einem induktiven Leistungsstromübertrager und mehreren optischen Signalübertragern. Auch hier ist ein gemeinsamer und gerader Luftspalt vorhanden, an dem die Kerne des Leistungsstromübertragers und die Signalübertrager fluchtend angeordnet sind.

Die DE 199 53 583 C1 befasst sich mit einer Asynchronmaschine, die einen Drehstromtransformator zur bürstenlosen Übertragung der Schlupfleistung besitzt. Signalübertrager sind hier nicht vorhanden. Der Luftspalt hat einen geraden Verlauf.

Es ist Aufgabe der vorliegenden Erfindung, einen verbesserten übertrager für solche Windkraftanlagen und andere Anwendungsbereiche aufzuzeigen.

Die Erfindung löst diese Aufgabe mit den Merkmalen im Hauptanspruch.
Statt eines Schleifringübertragers beinhaltet der Übertrager einen induktiven und berührungslosen Leistungsstromübertrager mit relativ zueinander bewegten Wicklungen. Der Leistungsstromübertrager dient zur Versorgung der Verbraucher bzw. Komponenten der Windkraftanlage. Die Leistung kann nahezu drehmomentfrei lokal über einen Luftspalt übertragen werden. Der Übertrager ist nahezu wartungsfrei. Er hat außerdem eine höhere Verfügbarkeit und Ausfallsicherheit. Er braucht ferner keine regelmäßigen Inspektions- und Wartungsintervalle, weil er präventiv und während des Betriebs durch Fernüberwachung und Ferndiagnose überprüft werden kann. Der Kosten/Nutzeneffekt wird dadurch wesentlich gesteigert. Außerdem lassen sich die Windkraftanlage und der Stromerzeuger bzw. Generator wesentlich besser und wirtschaftlicher steuern und regeln. Dies verbessert den Wirkungsgrad der Windkraftanlage.

Ferner ist es vorteilhaft, dass sich die Signalübertragung lokal zusammen mit der Leistungsstromübertragung im Übertrager durchführen lässt. Beides kann dabei in abschirm- und störgünstiger Weise über einen abgewinkelten Luftspalt mit axialem Versatz zwischen Signal- und Leistungsstromübertrager sowie koaxial geschehen. Hierbei kann außerdem der Signalübertrager in beliebig geeigneter Weise, z.B. optisch und/oder kapazitiv ausgebildet sein.

Mit dem erfindungsgemäßen Übertrager ist es möglich, den Leistungsstromübertrager ausgangsseitig mit ein oder mehreren Verbrauchern, insbesondere einer Erregerspule des Generators zu verbinden. Hierdurch kann die Erregerspule gesteuert und geregelt werden, wofür es besonders günstig ist, dass wegen der ebenfalls lokalen Signalübertragung die Steuer- und Regeleinrichtung nunmehr am rotierenden Teil der Windkraftanlage angebracht sein kann. Die Signalwege werden hierdurch deutlich verkürzt und störsicherer gemacht. Durch die gesicherte Leistungsstromübertragung ist es ferner möglich, Stellmotoren an den Rotorblättern anzuordnen und hierüber die Rotorblätter während des Umlaufs an die jeweiligen Windverhältnisse anzupassen und auszurichten. Die Windkraft lässt sich hierdurch optimal nutzen.

Die induktive Leistungsstromübertragung erfolgt durch Umformen eines eingespeisten Gleichstroms in einen Wechselstrom mit wählbarer Frequenz. Je höher die Frequenz ist, desto kleiner sind die Übertragungsverluste bei diesem Drehtransformator. Zudem können die Spulen und der Drehtransformator mit steigender Frequenz kleiner und leichter gebaut werden.

Für hohe Frequenzen des Wechselstroms ist eine entsprechende Abschirmung des Luftspaltes zwischen dem drehenden und dem stehenden Gehäuseteil vorteilhaft. Die lässt sich als Abschirmgitter mit einem Rollkontakt ausbilden, wodurch auch eine leitende Erdverbindung geschaffen werden kann.

In den Unteransprüchen sind weitere vorteilhafte Ausgestaltungen der Erfindung angegeben.

Die Erfindung ist in den Zeichnungen beispielsweise und schematisch dargestellt. Es zeigen:
- Figur 1 und 2:: zwei Varianten einer Windkraftanlage in abgebrochener und teilweise geschnittener Seitenansicht,
- Figur 3:: einen Längsschnitt durch einen Übertrager,

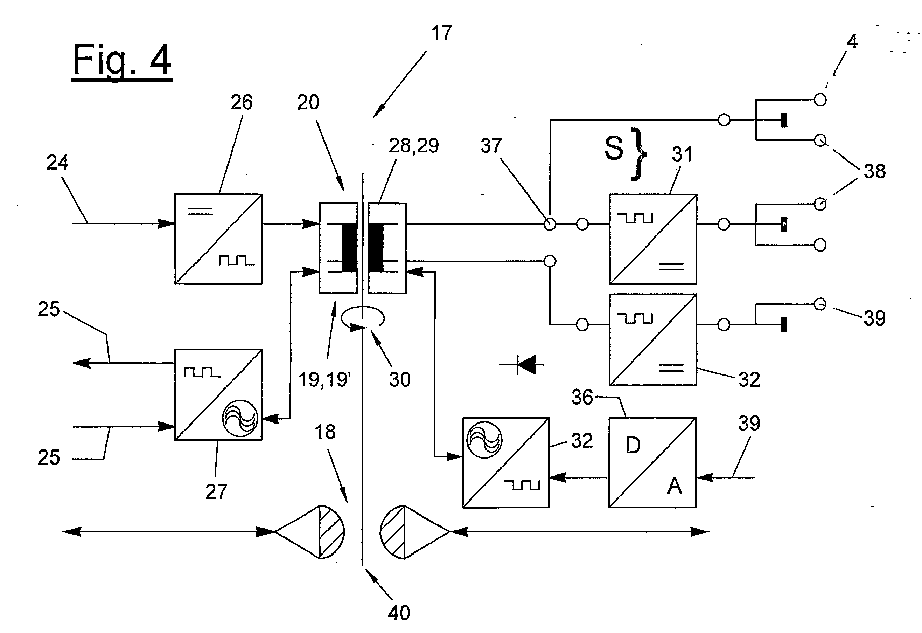

- Figur 4:: einen schematischen Schaltplan für den Übertrager,
- Figur 5:: einen Längsschnitt durch einen Übertrager gemäß Figur 3 mit Lagerung und Innenaufteilung des Gehäuses und
- Figur 6:: eine vergrößerte Detaildarstellung der Abschirmung am Übertrager.

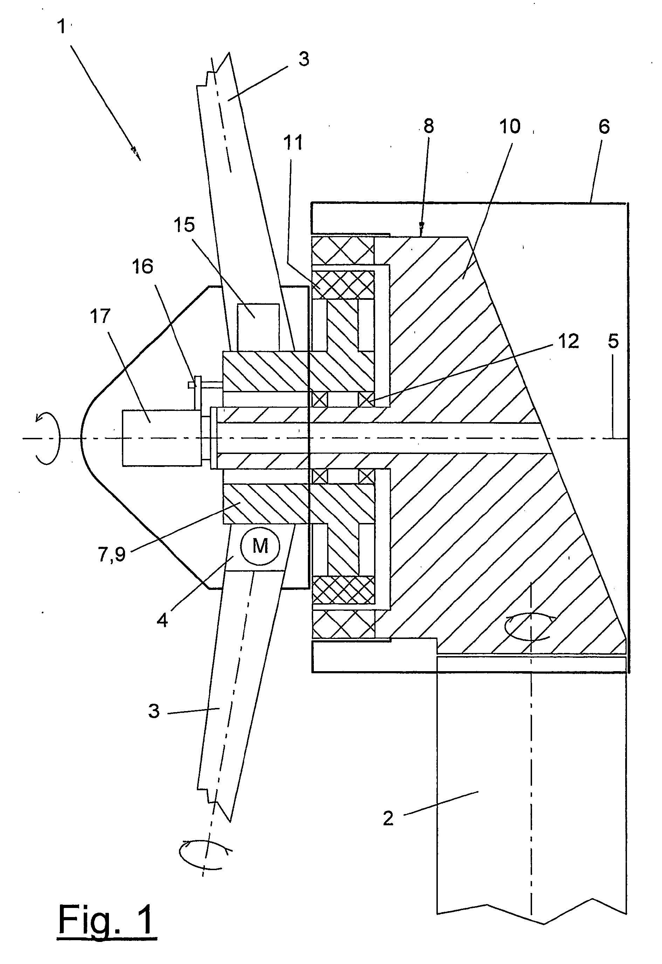

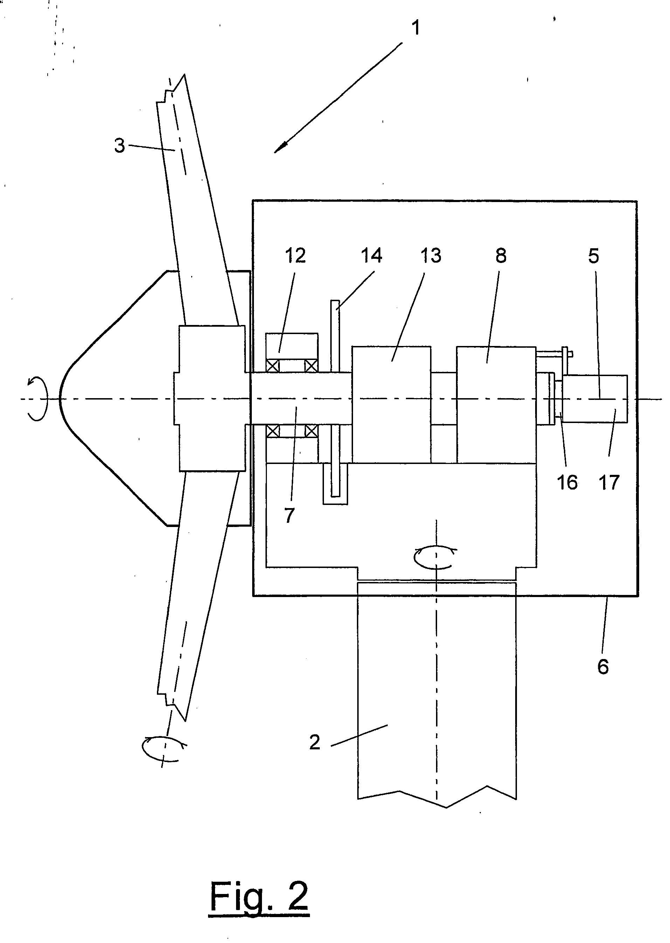

Figur 1 und 2 zeigen zwei Varianten einer Windkraftanlage (1), welche jeweils einen propellerartigen Windrotor mit zwei oder mehr Rotorblättern (3) aufweist. Der Windrotor treibt über Windkraft das rotierende Polrad (9) eines elektrischen Generators (8), der einen abgehenden Strom erzeugt, der ins öffentliche Netz oder in ein lokales Netz eingespeist wird. Der Generator (8) ist ggf. mit einem Getriebe (13) und einer Feststellbremse (14) ausgestattet und in einem Gehäuse (6) untergebracht, welches seinerseits auf einem Träger oder Mast (2) um eine vertikale Achse drehbar gelagert ist. Die Rotorblätter (3) rotieren um eine quer dazu liegende horizontale Drehachse (5) und treiben das Polrad (9) entweder mittelbar über eine Welle (7) mit separater Lagerung (12) wie in Figur 2 oder unmittelbar durch Anordnung an einem Ansatz des Polrads (9). Der Generator (8) kann in unterschiedlicher Weise ausgebildet sein. In der Ausführungsform von Figur 1 hat er eine steuer- und regelbare Erregerspule (11) am Polrad (9). Der Stator (10) ist relativ ortsfest im Gehäuse (6) angeordnet und trägt im Ausführungsbeispiel von Figur 1 über einen Achsansatz auch die Lagerung (12) für das Polrad (9).

Figur 1 verdeutlicht ferner, dass die Rotorblätter (3) im Fußbereich jeweils einen Stellantrieb (4) aufweisen können, der vorzugsweise einen elektrischen Stellmotor, insbesondere einen Servomotor besitzt. Hierdurch können die Rotorblätter (3) um ihre Längsachse gedreht und in unterschiedliche Drehstellungen zum Wind angestellt werden. Die Windkraft lässt sich hierdurch optimal nutzen. Die Stellmotoren (4) sind in der Variante von Figur 1 auf dem aus dem Gehäuse (6) heraus geführten und seitlich verlängerten Rotor (9) des Generators (8) angeordnet.

Zur Übertragung von Leistungsstrom und Signalen für die Aktoren im rotierenden Bereich der Windkraftanlage ist ein nachfolgend näher beschriebener Übertrager (17) vorgesehen, der sowohl Drehübertrager, wie auch Festübertrager ist, d.h. quasi einem elektrischen Stecker entspricht. Gegenstand der Erfindung ist der Übertrager (17) und auch eine mit einem solchen Übertrager (17) zur Versorgung von Verbrauchern am Windrotor ausgerüstete Windkraftanlage.

Der Übertrager (17) besitzt ein geteiltes Gehäuse (21) mit einem Drehteil oder Rotorteil (22) und einem relativ ortsfesten Teil oder Statorteil (23) aufweist. Die Gehäuseteile (22,23) sind durch Längs- und Querwände unter Bildung von Gehäusekammern (33,34,35) aus Stabilitäts- und Abschirmgründen unterteilt. Hierbei werden verschiedene Gehäusekammern (33,34) gebildet. Außerdem ist ein zentraler axialer Gehäusekanal (35) vorhanden. Die verschiedenen Gehäusekomponenten weisen an ihren Grenzschichten einen mehrschichten Aufbau aus Materialien unterschiedlicher Permeabilität auf. Dies erhöht die Abschirmwirkung bei minimalem Platzbedarf.

Der Übertrager (17) ist vorzugsweise auf der Drehachse (5) des Windrotors angeordnet. In der Variante von Figur 1 befindet er sich im drehenden Bereich vorn am Windrotor und ist geschützt in einer Rotorhaube untergebracht. In der Variante von Figur 2 ist er hinten positioniert und befindet sich im Gehäuse (6), wobei er mit der Welle (7) verbunden ist.

Der Übertrager (17) hat einen induktiven, berührungslos arbeitenden Leistungsstromübertrager (20) und mindestens einen im gleichen Gehäuse (21) untergebrachten Signalübertrager (18,19,19'). Im gezeigten Ausführungsbeispiel sind ein optischer Signalübertrager (18) und zusätzlich mindestens ein kapazitiver Signalübertrager (19,19') vorhanden.

Der Leistungsstromübertrager (20) ist ausgangsseitig an Verbraucher im vorzugsweise drehenden Bereich der Windkraftanlage (1) angeschlossen, z.B. an die vorerwähnten Stellmotoren (4) im Rotorbereich und/oder die Erregerwicklung (11) des Generators (8). Eingangsseitig ist der Leistungsstromübertrager (20) mit einer beliebig geeigneten Stromversorgung über Anschlüsse (24) verbunden.

Der oder die Signalübertrager (18,19,19') sind ausgangsseitig und vorzugsweise am Rotorteil (22) mit einer im rotorierenden Bereich angeordneten Steuer- und Regeleinrichtung (15) verbunden. Eingangsseitig sind sie an eine andere Steuerung (nicht dargestellt) angeschlossen. Ausgangsseitig kann auch eine direkte Verbindung zu den Verbrauchern, z.B. den Stellmotoren (4), der Erregerspule (11) und/oder anderen Sensoren bzw. Aktoren bestehen. Die Steuer- und Regeleinrichtung (15) kann alternativ auch stationär angeordnet sein.

Der Leistungsstromübertrager (20) und der oder die Signalübertrager (18,19,19') sind koaxial zueinander im Gehäuse (21) angeordnet, wobei der Leistungsstromübertrager (20) vorzugsweise außen liegt. Das Gehäuse (21) bzw. der Übertrager (17) sind in der nachfolgend noch näher beschriebenen Weise elektrisch multiaxial ausgebildet. Der im Innenbereich liegende optische Signalübertrager (18) ist im zentralen Gehäusekanal (35) angeordnet. Der einzelne kapazitive Signalüberträger (19,19') ist ebenfalls zumindest ausgangsseitig mit seinen Leitungen im inneren Gehäusebereich angeordnet.

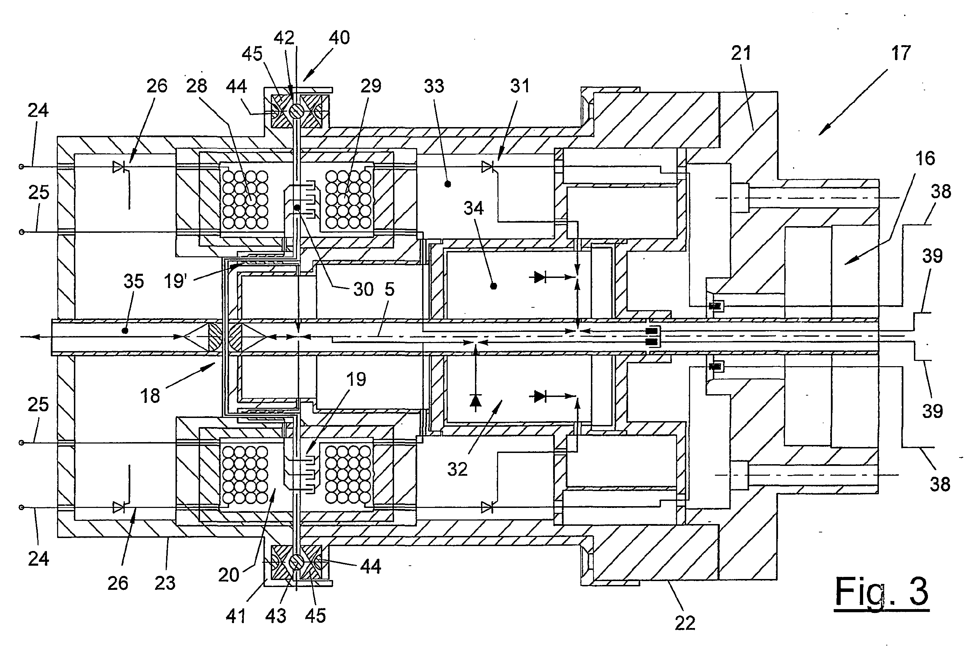

Die beiden Gehäuseteile (22,23) sind über eine quer zur Drehachse (5) gerichtete Trennebene unter Bildung eines zumindest im Bereich des induktiven Leistungsstromübertragers (20) befindlichen Luftspalts (30) axial voneinander getrennt. In diesem Luftspalt (30) kann eine nachfolgend näher beschriebene Abschirmung (40) vorhanden sein. Die Trennebene kann wie in Figur 3 dargestellt aus mehreren verschachtelten oder zueinander versetzten Einzelebenen bestehen.

Der induktive Leistungsstromübertrager (20) ist als um die zentrale Achse (5) drehender Transformator ausgebildet. Er besteht aus einer ringförmigen Spulenwicklung (28) im Statorteil (23) und einer über den Luftspalt (30) gegenüber liegend angeordneten Ringspulenwicklung (29) im Rotorteil (22) des Gehäuses (21). Die Spulenwicklungen (28,29) mit ihrem vorzugsweise aus Weichferrit bestehenden Trafokernhälften im Topfformat sind jeweils in einem ringförmigen Trafogehäuse abgeschirmt untergebracht.

Über den Luftspalt (30) wird die elektrische Leistung im drehenden Betrieb wie auch bei Stillstand des Übertragers (17) übertragen. Der Luftspalt (30) kann zumindest bei der Montage in der Breite eingestellt werden. Er dient auch zur Dämpfung der Leistungsübertragungsspitzen, die z.B. durch Spitzenlasten der genannten Aktoren entstehen können. Diese Strom- und spannungsspitzen können sich dann nicht schädlich auf den Statorbereich auswirken.

Die elektrische Leistungsübertragung erfolgt mittels Wechselstrom. Hierfür ist dem Leistungsstromübertrager (20) mindestens ein Inverter (26) vorgeschaltet, der aus dem an den Anschlüssen oder Eingangsklemmen (24) anliegenden Gleichstrom einen Wechselstrom mit vorwählbarer Frequenz formt. Die Speisespannung liegt üblicherweise im Klein- oder Niederspannungsbereich zwischen z.B. 12 V und 1000 V. Die vom Inverter (26) erzeugte Frequenz liegt je nach Ferritmaterial und beherrschbarem Eigenstörpotential im Bereich zwischen 20 kHz und 200 kHz dank der besonderen Gehäuseausbildung und Abschirmtechnik. Die Frequenz kann auch höher liegen. Der Wechselstrom wird über den drehenden oder stehenden Transformator mit den Wicklungen (28,29) weitgehend drehmomentenfrei und verlustarm übertragen. Je höher die gewählte Wechselstromfrequenz ist, desto größer ist die übertragbare Leistungskapazität. Die mit höheren Frequenzen steigenden Störfelder können durch die nachfolgend näher beschriebene Gehäusegestaltung und Abschirmung (40) am Luftspalt (30) behoben werden.

Ausgangsseitig ist der Leistungsstromübertrager (20) an mindestens einen Konverter (31) angeschlossen, der den Wechselstrom wieder gleichrichtet. Der an den Ausgangsklemmen (38) anliegende Leistungsstrom kann z.B. eine Spannung von ±300 V bis ±400 V haben. Hierbei können Leistungsströme von ca. 60 A bis 70 A und Leistungen von beispielsweise 50 kW und mehr abgegeben werden. An die Ausgangsklemmen (38) des gleichgerichteten Leistungsstroms ist z.B. die Erregerspule (11) angeschlossen. Hier kann auch das Leistungsteil der Steuer- und Regeleinrichtung (15) angeschlossen werden.

Zwischen der Wickelspule (29) und dem Konverter (31) können ferner ein oder mehrere elektrische Anzapfungen (37) liegen, an denen der Wechselstrom abgenommen werden kann und an Klemmen (38) zur Verfügung steht. Je nach Trafoauslegung kann der Wechselstrom eine Spannung von z.B. 315 V bis 660 V bei einer Stromstärke von z.B. 50 A haben. Über die Anzapfung (37) können z.B. die Stellmotoren (4) der Rotorblätter (3) versorgt werden, die dadurch als Drehstrom-Servomotoren ausgebildet sein können. Durch die Anzapfung (37) kann eine erneute Umrichtung des Leistungsgleichstroms vermieden werden.

Die Konverter (31) und die Anzapfung(en) (37) befinden sich ebenfalls, möglichst weit außen am Gehäuse (21) und sind in außen liegenden Gehäusekammern (33) untergebracht.

Beim optischen Signalübertrager (18) verlaufen die Leitungen innen im zentralen Gehäusekanal (35). Am winklig verlaufenden Luftspalt (30) stehen sich zwei geeignete optische Übertragungselemente und vorzugsweise beidseitiger Signalübertragung gegenüber. Der optische Signalübertrager (18) kann z.B. mit einem MSR-Opto-Bus auf der Basis einer RS 422/485-Schnittstelle arbeiten.

Der eine kapazitive Signalübertrager (19) ist im Spulenbereich des induktiven Leistungsstromübertragers (20) eingebunden, wobei er gegenüber dem Luftspalt (30) axial versetzt ist. Hierzu werden über Anschlussklemmen (25) am Statorteil (23) Signalströme von außen zugeführt und über einen den Luftspalt (30) überbrückenden kapazitiven und mehrspurigen Übertrager mit axialem Eingriff, der zwischen den Wickelspulen (28,29) angeordnet ist, kontaktfrei und störsicher übertragen. Eingangsseitig kann der Signalübertrager (19) ebenfalls einen Inverter (27) aufweisen, der den Signalgleichstrom wechselrichtet und über ein Frequenzshifting die Signale moduliert.

Ferner kann ein zusätzlicher kapazitiver Signalübertrager (19') vorhanden sein, der zwischen den Gehäuseteilen (22,23) im Überlappungsbereich zwischen einem axialen Vorsprung des Rotorteils (22) und einer ringförmigen Aufnahme im Statorteil (23), die z.B. vom Trafogehäuse gebildet wird, angeordnet ist. Dieser kapazitive Signalübertrager (19') kann mit einer radialen Signalübertragungsrichtung berührungsfrei arbeiten.

Ausgangs- bzw. rotorseitig werden die Signalleitungen am Statorteil (23),nach Verlassen des Trafojochs radial nach innen in den zentralen Gehäusekanal (5) geführt. Die ausgangsseitigen Signalleitungen sind mit mindestens einem Konverter (34) und einer Übertragungs- und Steuerelektronik, insbesondere einer MSR-Elektronik verbunden, die in einer außenseitig an den Gehäusekanal (35) angrenzenden inneren Gehäusekammer (34) untergebracht ist. An den Konverter (32) kann in üblicher Weise ein Digital-Analogwandler (36) angeschlossen sein. Die Signalströme können über Ausgangsklemmen (39) am Rotorteil (32) abgegriffen und z.B. der Steuer- und Regeleinrichtung (15) oder auch anderen Aktoren, insbesondere den Stellmotoren (4) zugeleitet werden.

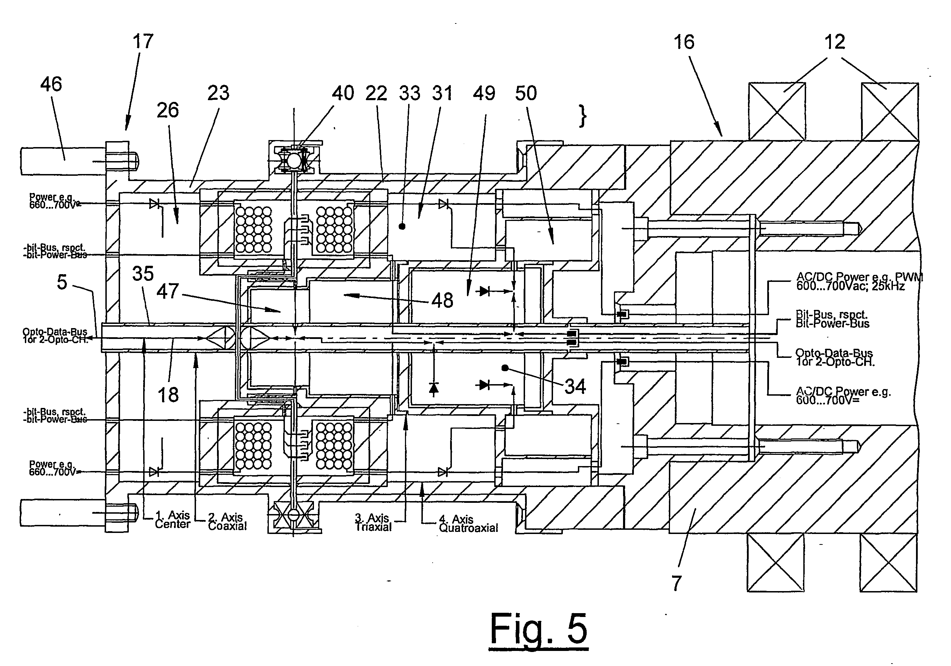

Wie Figur 5 in einer schematischen Aufteilung verdeutlicht, sind im innen liegenden Gehäusebereich zwischen den Trafojochen und dem zentralen Gehäusekanal (35) in den ringförmigen Hohlräumen abgeschirmt elektronische Steuerteile untergebracht. Dies kann z.B. die MSR-Übertragungselektronik (47) für den optischen Signalübertrager (18) und daneben die Übertragungselektronik (48) für den oder die kapazitiven Signalübertrager (19,19') sein. Im axial angrenzenden und ebenfalls innen liegenden Gehäusebereich ist eine weitere Steuerkomponente untergebracht; dies kann z.B. ein *µ*C Online Controller (49) sein. Mit diesem werden Überwachungs-, Analyse- und Testaufgaben durchgeführt. Mit diesem Controller wird z.B. der Konverter (31) gesteuert und geregelt.

Axial an die außen liegende Gehäusekammer (34) anschließend ist eine weitere Gehäusekammer vorhanden, in der eine Steuereinheit für die Leistungsübertragung untergebracht ist. Dies kann z.B. ein *µ*C Power Controller sein.

Zur Einstellung des benötigten Rotorblattwinkels in Abhängigkeit von der anstehenden Windkraft können an den Rotorblättern (3) geeignete Messaufnehmer, z.B. Kraftmesser in Form von Dehnmessstreifen oder dgl. angebracht sein, die mit der rotorseitigen Steuer- und Regeleinrichtung (15) verbunden sind. Diese kann im Übertrager (17), z.B. in der Gehäusekammer (34) untergebracht sein. Sie berechnet anhand von Vorgabewerten und auch durch Vergleich mit den Werten anderer Rotorblätter (3) die jeweils optimale Winkelstellung der Rotorblätter (3) zum Wind und steuert die Stellmotoren (4) entsprechend an. Die Winkelstellung kann hierbei während der Umlauf- oder Drehbewegung des Windrotors ein oder mehrmals verändert werden, je nach Wind- und Strömungsverhältnissen. Durch diese Windkraftregelung kann der Wirkungsgrad der Windkraftanlage (1) optimiert werden.

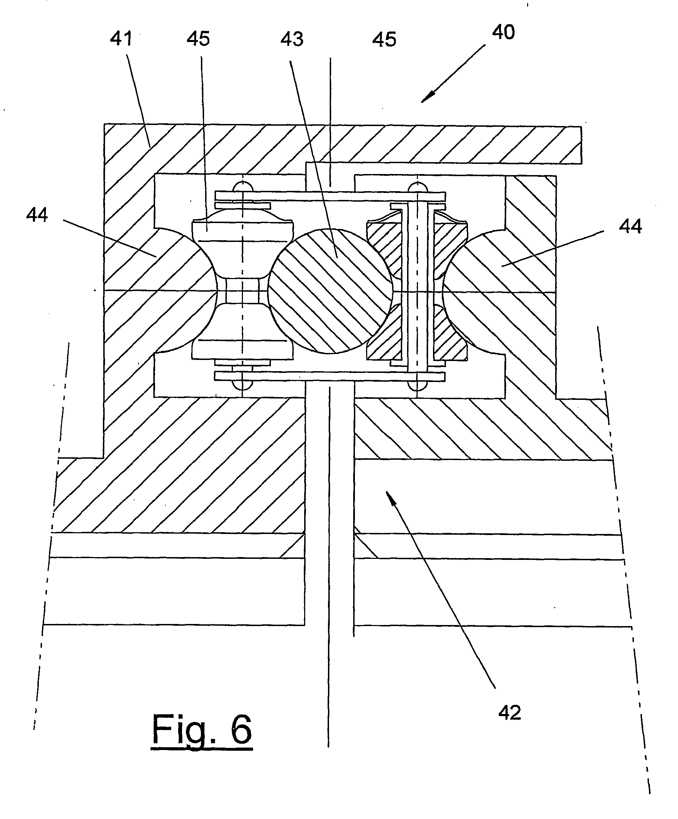

Das Gehäuse (21) des Übertragers (17) hat im Bereich des Luftspalts (30) eine geeignete Abschirmung (40). Diese ist in Figur 6 detaillierter dargestellt und besteht z.B. aus einer durchgehenden Systemmasse oder -erdung über Rollkontakte (42), welche in einem von den Gehäuseteilen (22,23) gebildeten ringförmig umlaufenden Käfig (41) untergebracht sind. Der Rollkontakt (42) dient zur Erdung und leitenden Verbindung sowie zur gegenseitigen mechanischen Zentrierung der beiden relativ zueinander drehbaren Gehäuseteile (22,23). Das Gehäuse (21) bildet dadurch einen Faradayschen Käfig.

Der Rollkontakt (42) wird z.B. aus einem zentralen und konzentrisch zur Drehachse (5) angeordneten inneren Ring (43) im Bereich des Luftspalts (30) und zwei an den seitlichen Käfigwänden angeordneten oder angeformten äußeren Ringen (44) gebildet, zwischen denen sich in ähnlicher Weise wie bei einem Wälzlager Rollkörper (45) befinden, die bei der relativen Gehäusedrehung um die Drehachse (5) mitlaufen. Die im Querschnitt kreisförmigen oder halbkreisförmigen Ringe (43,44) bilden Laufflächen für die vorzugsweise mittig eingeschnürten Rollkörper (45). Die Ringe (43,44) und die Rollkörper (45) haben auch eine Zentrierfunktion. Die Rollkörper (45) bestehen z.B. aus Formteilen, die paarweise um radial zur Drehachse (5) angeordnete Rollenachsen frei drehbar gelagert sind und aus einem elektrisch leitenden Material, z.B. Metall, bestehen. Die beiden Rollenachsen sind endseitig durch ringförmige Joche miteinander quer verbunden.

Die beiden Gehäuseteile (22,23) können in beliebiger Weise relativ zueinander geführt und gelagert sein. Die Lagerung ist schematisch in Figur 5 dargestellt. Z.B. ist das Rotorteil (22) endseitig mit einem Anschluss (16) versehen, der eine vorzugsweise formschlüssige ineinander greifende Verbindung mit dem Windrotor und insbesondere seiner Welle (7) ermöglicht. Über den Anschluss (16) kann alternativ nach Art einer Drehmomentenstütze auf eine direkte Verbindung mit dem Rotor (9) des Generators (8) wie im Ausführungsbeispiel der Figur 1 geschaffen werden. Das Statorteil (23) ist über ein oder mehrere geeignete Beschläge (46) mit einem nicht dargestellten relativ ortsfesten Teil im Gehäuse (6), z.B. dem Stator (10) des Generators (8), fest verbunden.

Die Gehäuseteile (22,23) können aneinander gelagert und z.B. innenseitig mit Formschluss aneinander geführt sein. Alternativ kann auch eine Außenlagerung vorhanden sein, in dem das Rotorteil (22) über ein Lager (12) im Gehäuse (6) frei drehbar und konzentrisch zur Drehachse (5) geführt wird.

Wie eingangs erwähnt, kann der Übertrager (17) in elektrischer Hinsicht bezüglich der internen Abschirmung mehrachsig ausgebildet sein bzw. aus mehreren konzentrischen Schalen bestehen. Figur 5 zeigt diese Ausbildung. Die erste Achse definiert z.B. der zentrale optische Signalübertrager (18) in der Drehachse (5). Die zweite koaxiale Achse bildet der rohrförmige Schirm bzw. die Wandung des zentralen Gehäusekanals (35). Die dritte Achse wird von der benachbarten axialen Gehäusewandung geschaffen, welche die Gehäusekammern (33,34) trennt. Die vierte Achse ist die axiale Außenwandung des Gehäuses (21). Diese elektrische Mehrachsigkeit sorgt für eine bessere Störungssicherheit und Abschirmung.

Abwandlungen der gezeigten Ausführungsform sind in verschiedener Weise möglich. Zum einen können die Zuordnungen der drehenden und stehenden Teile in einer kinematischen Umkehr miteinander vertauscht werden. Dies gilt sowohl für das Gehäuse (21), wie auch für andere Komponenten. Ferner kann die Trennebene zwischen den Gehäuseteilen des Übertragers koaxial liegen mit entsprechender Anordnung der Spulenwicklungen (28,29). Variabel sind ferner Zahl, Ausbildung und Anordnung der Signalübertrager. Auch die Abschirmung (40) kann anders ausgebildet sein, z.B. als Schleifkontakt.

Variabel sind ferner die Einsatzmöglichkeiten des Übertragers (17). Der bevorzugte Einsatzbereich sind Kraftanlagen mit einem Stromerzeuger, insbesondere einem Generator (8). An die Stelle von Windkraftanlagen (1) können auch andere solcher Anlage, z.B. Wärme- und Wasserkraftanlagen treten. In diesem Fall ist der Übertrager (17) mit einem Turbinenrad verbunden.

### BEZUGSZEICHENLISTE

- 1: Windkraftanlage
- 2: Träger, Mast
- 3: Rotorblatt
- 4: Stellmotor
- 5: Drehachse
- 6: Gehäuse
- 7: Welle
- 8: Generator
- 9: Rotor Generator
- 10: Stator Generator
- 11: Erregerwicklung
- 12: Lager
- 13: Getriebe
- 14: Bremse
- 15: Steuer- und Regeleinrichtung
- 16: Anschluss an Windrotor
- 17: Übertrager
- 18: Signalübertrager optisch
- 19: Signalübertrager kapazitiv
- 19': Signalübertrager kapazitiv
- 20: Leistungsstromübertrager induktiv
- 21: Gehäuse
- 22: Gehäuseteil, Rotorteil
- 23: Gehäuseteil, Statorteil
- 24: Anschluss Leistungsstrom, Eingangsklemme
- 25: Anschluss Signalstrom, Eingangsklemme
- 26: Inverter Leistungsstrom
- 27: Inverter Signalstrom
- 28: Wicklung Statorteil
- 29: Wicklung Rotorteil
- 30: Luftspalt
- 31: Konverter Leistungsstrom
- 32: Konverter Signalstrom
- 33: Gehäusekammer außen
- 34: Gehäusekammer innen
- 35: Gehäusekanal zentral
- 36: D/A-Wandler
- 37: Anzapfung
- 38: Anschluss Leistungsstrom, Ausgangsklemme
- 39: Anschluss Signalstrom, Ausgangsklemme
- 40: Abschirmung
- 41: Käfig
- 42: Rollkontakt
- 43: Ring innen, Zentrierring
- 44: Ring außen
- 45: Rollkörper
- 46: Beschlag
- 47: optische Übertragungs-Elektronic
- 48: kapazitive Übertragungs-Elektronic
- 49: *µ*C Online Controller
- 50: *µ*C Power Controller

## Patentansprüche

1. Übertrager insbesondere für Windkraftanlagen (1), die einen Windrotor und einen Generator (8) aufweisen, wobei der Übertrager (17) einen Leistungsstromübertrager (20) aufweist, wobei der Übertrager (17) als Dreh- und Festübertrager mit einem Statorteil (23) und einem Rotorteil (22) ausgebildet ist und einen induktiven berührungslosen Leistungsstromübertrager (20) sowie mindestens einen Signalübertrager (18,19,19') aufweist, die gemeinsam im Gehäuse (21) des Übertragers (17) angeordnet sind, wobei das Statorteil (23) und das Rotorteil (22) zumindest im Bereich des Leistungsstromübertragers (20) durch einen Luftspalt (30) voneinander getrennt sind, **dadurch gekennzeichnet, dass** der Luftspalt (30) winklig verläuft und dass mindestens ein Signalübertrager (18,19') im abgewinkelten Luftspaltbereich axial versetzt zum Leistungsstromübertrager (20) angeordnet ist.

2. Übertrager nach Anspruch 1, **dadurch gekennzeichnet, dass** der Leistungsstromübertrager (20) und der Signalübertrager (18,19,19') koaxial im Gehäuse (21) angeordnet sind, wobei der Leistungsstromübertrager (20) außen liegt.

3. Übertrager nach nach Anspruch 1 oder 2, **dadurch gekennzeichnet, dass** der Signalübertrager (18,19,19') als optischer und/oder kapazitiver Signalübertrager ausgebildet ist.

4. Übertrager nach Anspruch 1, 2 oder 3, **dadurch gekennzeichnet, dass** der Leistungsstromübertrager (20) ausgangsseitig mit ein oder mehreren Verbrauchern, vorzugsweise einer Erregerspule (11) und/oder Stellmotoren (4) für die Rotorblätter (3), verbunden ist.

5. Übertrager nach Anspruch 1 oder 2, **dadurch gekennzeichnet, dass** der Signalübertrager (18,19,19') ausgangsseitig mit einer am Windrotor angeordneten Steuer- und Regeleinrichtung (15) verbunden ist.

6. Übertrager nach Anspruch 1, 2 oder 3, **dadurch gekennzeichnet, dass** der Leistungsstromübertrager (20) einen vorgeschalteten Inverter (26) zur Erzeugung eines Wechselstroms mit vorzugsweise wählbarer Frequenz aufweist.

7. Übertrager nach einem der vorhergehenden Ansprüche, **dadurch gekennzeichnet, dass** die Wechselstrom-Frequenz zwischen 20 und 200 kHz liegt.

8. Übertrager nach einem der vorhergehenden Ansprüche, **dadurch gekennzeichnet, dass** der Leistungsstromübertrager (20) einen nachgeschalteten Konverter (31) zur Erzeugung eines LeistungsGleichstroms aufweist.

9. Übertrager nach einem der vorhergehenden Ansprüche, **dadurch gekennzeichnet, dass** vor dem Konverter (31) mindestens eine Anzapfung (37) für den Wechselstrom angeordnet ist.

10. Übertrager nach einem der vorhergehenden Ansprüche, **dadurch gekennzeichnet, dass** die Anzapfung (37) mit ein oder mehreren Stellmotoren (4) für die Rotorblätter (3) verbunden ist.

11. Übertrager nach einem der vorhergehenden Ansprüche, **dadurch gekennzeichnet, dass** der elektrische Signalübertrager (19,19') einen vorgeschalteten Inverter (27) und einen nachgeschalteten Konverter (32) aufweist.

12. Übertrager nach einem der vorhergehenden Ansprüche, **dadurch gekennzeichnet, dass** der Übertrager (17) elektrisch mehrachsig aufgebaut ist.

13. Übertrager nach einem der vorhergehenden Ansprüche, **dadurch gekennzeichnet, dass** außenseitig am Gehäuse (21) am Luftspalt (30) eine Abschirmung (40) angeordnet ist.

14. Übertrager nach einem der vorhergehenden Ansprüche, **dadurch gekennzeichnet, dass** die Abschirmung (40) ein Abschirmgitter mit einem Rollkontakt (42) aufweist.

## Claims

1. Transformer in particular for wind energy installations (1), which have a wind rotor and a generator (8), in which the transformer (17) has a power transformer (20), in which the transformer (17) is in the form of a rotary and stationary transformer with a stator part (23) and a rotor part (22) and has an inductive non-contacting power transformer (20) as well as at least one signal transmitter (18, 19, 19'), which are arranged jointly in the housing (21) of the transformer (17), and in which the stator part (23) and the rotor part (22) are separated from one another at least in the area of the power transformer (20) by means of an airgap (30), **characterized in that** the airgap (30) runs at an angle and **in that** at least one signal transmitter (18, 19') is arranged axially offset with respect to the power transformer (20) in the angled airgap area.

2. Transformer according to Claim 1, **characterized in that** the power transformer (20) and the signal transmitter (18, 19, 19') are arranged coaxially in the housing (21), with the power transformer (20) being located on the outside.

3. Transformer according to Claim 1 or 2, **characterized in that** the signal transmitter (18, 19, 19') is in the form of an optical and/or capacitive signal transmitter.

4. Transformer according to Claim 1, 2 and 3, **characterized in that** the power transformer (20) is connected on the output side to one or more loads, preferably to a field coil (11) and/or to actuating motors (4) for the rotor blades (3).

5. Transformer according to Claim 1 or 2, **characterized in that** the signal transmitter (18, 19, 19') is connected on the output side to an open-loop and closed-loop control device (15) which is arranged on the wind rotor.

6. Transformer according to Claim 1, 2 or 3, **characterized in that** the power transformer (20) has an upstream inverter (26) for production of an alternating current at a preferably variable frequency.

7. Transformer according to one of the preceding claims, **characterized in that** the alternating-current frequency is between 20 and 200 kHz.

8. Transformer according to one of the preceding claims, **characterized in that** the power transformer (20) has a downstream converter (31) for production of a power direct current.

9. Transformer according to one of the preceding claims, **characterized in that** at least one tap (37) for the alternating current is arranged upstream of the converter (31).

10. Transformer according to one of the preceding claims, **characterized in that** the tap (37) is connected to one or more actuating motors (4) for the rotor blades (3).

11. Transformer according to one of the preceding claims, **characterized in that** the electrical signal transmitter (19, 19') has an upstream inverter (27) and a downstream converter (32).

12. Transformer according to one of the preceding claims, **characterized in that** the transformer (17) is designed to have a plurality of electrical axes.

13. Transformer according to one of the preceding claims, **characterized in that** a screen (40) is arranged on the airgap (30) on the outside of the housing (21).

14. Transformer according to one of the preceding claims, **characterized in that** the screen (40) has a screening grating with a rolling contact (42).

## Revendications

1. Transformateur, notamment pour éoliennes (1) qui ont un rotor tournant sous l'effet du vent et une génératrice (8), le transformateur (17) ayant un transformateur (20) de courant de puissance, le transformateur (17) étant constitué sous la forme d'un transformateur tournant et d'un transformateur fixe, ayant une partie (23) statorique et comportant un transformateur (20) de courant de puissance inductif et sans contact ainsi qu'au moins un transmetteur (18, 19, 19') de signal, qui sont disposés ensemble dans l'enveloppe (21) du transformateur (17), la partie (23) statorique et la partie (22) rotorique étant séparées l'une de l'autre au moins dans la zone du transformateur (20) de courant de puissance par un entrefer (30),
**caractérisé en ce que** l'entrefer (30) s'étend en étant coudé et **en ce qu'**au moins un transmetteur (18, 19') de signal est disposé dans la zone de l'entrefer coudé en étant décalé axialement par rapport au transformateur (20) de courant de puissance.

2. Transformateur suivant la revendication 1, **caractérisé**
**en ce que** le transformateur (20) de courant de puissance et le transmetteur (18, 19, 19') de signal sont disposés coaxialement dans l'enveloppe (21), le transformateur (20) de courant de puissance se trouvant à l'extérieur.

3. Transformateur suivant la revendication 1 ou 2, **caractérisé**
**en ce que** le transmetteur (18, 19, 19') de signal est constitué sous la forme d'un transmetteur de signal optique et/ou capacitif.

4. Transformateur suivant la revendication 1, 2 ou 3, **caractérisé**
**en ce que** le transformateur (20) de courant de puissance est relié du côté sortie à un ou plusieurs appareils utilisateurs, de préférence une bobine (11) d'excitation et/ou des servomoteurs (4) pour les lames (3) du rotor.

5. Transformateur suivant la revendication 1 ou 2, **caractérisé**
**en ce que** le transmetteur (18, 19, 19') de signal est relié du côté sortie à un dispositif (15) de commande et de régulation disposés sur le rotor tournant sous l'effet du vent.

6. Transformateur suivant la revendication 1, 2 ou 3 **caractérisé**
**en ce que** le transformateur (20) de courant de puissance a un inverseur (26), monté en amont, de production d'un courant alternatif d'une fréquence pouvant être, de préférence, sélectionnée.

7. Transformateur suivant l'une des revendications précédentes, **caractérisé**
**en ce que** la fréquence du courant alternatif est comprise entre 20 et 200 kHz.

8. Transformateur suivant l'une des revendications précédentes, **caractérisé**
**en ce que** le transformateur (20) de courant de puissance a un convertisseur (31), monté en aval, de production d'un courant continu de puissance.

9. Transformateur suivant l'une des revendications précédentes, **caractérisé**
**en ce qu'**au moins une prise (37) de courant alternatif est monté en amont du convertisseur (31).

10. Transformateur suivant l'une des revendications précédentes, **caractérisé**
**en ce que** la prise (37) est reliée à un ou à plusieurs servomoteurs (4) pour les lames (3) du rotor.

11. Transformateur suivant l'une des revendications précédentes, **caractérisé**
**en ce que** le transmetteur (19, 19') de signal électrique a un inverseur (27) monté en amont et un convertisseur (32) monté en aval.

12. Transformateur suivant l'une des revendications précédentes, **caractérisé**
**en ce que** le transformateur (17) est constitué suivant plusieurs axes électriquement.

13. Transformateur suivant l'une des revendications précédentes, **caractérisé**
**en ce qu'**un blindage (40) est disposé du côté extérieur sur l'enveloppe (21) à l'entrefer(30).

14. Transformateur suivant l'une des revendications précédentes, **caractérisé**
**en ce que** le blindage (40) a une grille de blindage ayant un contact (42) par galets.
